Europäisches Patentamt

European Patent Office

Office européen des brevets

(11) Veröffentlichungsnummer: **0 461 740 A2**

(12) **EUROPÄISCHE PATENTANMELDUNG**

(21) Anmeldenummer: 91250152.5

(51) Int. Cl.5: **G01N 3/42**

(22) Anmeldetag: **11.06.91**

(30) Priorität: 12.06.90 DE 4019120
11.06.91 DE 4119564

(43) Veröffentlichungstag der Anmeldung:
**18.12.91 Patentblatt 91/51**

(84) Benannte Vertragsstaaten:
**AT DE ES FR GB IT**

(71) Anmelder: **MANNESMANN Aktiengesellschaft
Mannesmannufer 2
W-4000 Düsseldorf 1(DE)**

(72) Erfinder: **Dehe, Hans Jürgen
Hinsbecker Berg 12
W-4300 Essen 15(DE)**
Erfinder: **Bösebeck, Heinz
Händelstrasse 29
W-4020 Mettmann(DE)**
Erfinder: **Ruyters, Wolfgang
Am Pohlacker 27
W-4030 Ratingen 4(DE)**

(74) Vertreter: **Meissner, Peter E., Dipl.-Ing. et al
Patentanwaltsbüro Meissner & Meissner,
Herbertstrasse 22
W-1000 Berlin 33(DE)**

(54) Verfahren und Vorrichtung zur Prüfung der Härte eines Werkstückes nach dem Eindringverfahren.

(57) Die Erfindung betrifft ein Verfahren zur Prüfung der Härte eines eine stetig gekrümmte Mantelfläche aufweisenden Werkstückes, insbesondere Rohr oder Stab, nach dem Eindringverfahren, bei dem bei festgehaltenem Werkstück mittels einer zum Werkstück bewegbaren Vorrichtung, an der ein Bearbeitungswerkzeug und ein Härteprüfgerät angeordnet sind, ein Eindringkörper mit einer definierten Kraft in einen vorher mechanisch bearbeiteten Bereich der Werkstückoberfläche gepreßt wird. Um ein Verfahren und eine Vorrichtung zur Prüfung der Härte eines Werkstückes anzugeben, mit dem bzw. mit der im Fertigungsfluß für Werkstücke mit einer stetig gekrümmten Mantelfläche, insbesondere Rohre oder Stäbe, eine automatische Härteprüfung mit hoher Aussagekraft möglich ist zu schaffen, wird vorgeschlagen, daß ein im horizontalen Wegbereich des Bearbeitungswerkzeuges liegender Bereich der Werkstückoberfläche vor der Bearbeitung mittels eines Abstandsensors linienförmig abgetastet und aus den Meßdaten der Scheitelpunkt der gekrümmten Oberfläche ermittelt wird, der dann für die Positionierung des Härteprüfgerätes den Prüfort und ein im Scheitelbereich des Werkstückes liegender Ort den Bezugspunkt für die vertikale Positionierung des Bearbeitungswerkzeuges bildet.

Fig. 4

Die Erfindung betrifft ein Verfahren und eine Vorrichtung zur Prüfung der Härte eines eine stetig gekrümmte Mantelfläche aufweisenden Werkstückes, insbesondere Rohr oder Stab, nach dem Eindringverfahren gemäß dem Gattungsbegriff der Ansprüche 1 und 5.

Je nach Verwendungszweck muß in vielen Fällen das über unterschiedliche Verfahren hergestellte Werkstück, insbesondere aus Stahl, eine vorgegebene Mindestfestigkeit aufweisen, die entweder über die chemische Analyse, die Art und Größe der Umformung mit ggf. einer nachgeschalteten Wärmebehandlung oder über eine Kombination der genannten Verfahren eingestellt wird. Dabei kann die Wärmebehandlung integraler Bestandteil des Herstellverfahrens sein oder ein separater Schritt innerhalb einer Abfolge von verschiedenen Arbeitsschritten. Um nicht erst im Zuge der Endabnahme die Einhaltung der geforderten Mindestfestigkeit prüfen zu können, wird nach dem Prinzip einer kontrollierten Fertigung die Richtigkeit der durchgeführten Wärmebehandlung mittels einer Härteprüfung an jedem Stück oder nach einem Stichprobenplan überprüft.

Mit Hilfe bereits bekannter Tabellen kann dann der ermittelte Härtewert einem entsprechenden Festigkeitswert zugeordnet werden. Da die Härtemessung aus Gründen der Arbeitstaktfolge möglichst im Fertigungsfluß erfolgen soll, wird nach dem Wärmebehandlungsaggregat in Abhängigkeit der Abkühlbedingungen unmittelbar danach oder etwas weiter entfernt eine Prüfstation mit einem Härteprüfgerät angeordnet. Die Prüfstation besteht im wesentlichen aus einer das Werkstück fixierenden Haltevorrichtung, aus einer ein Bearbeitungswerkzeug tragenden Vorrichtung und einem Härteprüfgerät. Als Verfahren werden das Brinell- oder das Vickers-Verfahren angewendet, wobei meistens dem Brinell-Verfahren der Vorzug gegeben wird. Das Prüfverfahren läuft in der Weise ab, daß nach der Fixierung des Werkstückes im Rollgang eine im Prüfbereich liegende Stelle der Werkstückoberfläche zur Erzeugung einer ebenen und glatten Prüffläche mechanisch bearbeitet wird, wobei diese Bearbeitung beispielsweise ein Fräsen oder ein Schleifen mit vorgegebener Tiefeneinstellung ist. Das Einpressen des Eindringkörpers, sei es Kugel oder Pyramide, erfolgt mit einer definierten Kraft im Idealfall genau im Mittenbereich der bearbeiteten Fläche. Der Abdruck der sich ergebenden Eindrückfläche wird in bekannter Weise mittels einer einschwenkbaren Optik auf eine Mattscheibe übertragen. Der Prüfer kann mit Hilfe bekannter Hilfsmittel über die Messung des Durchmessers bzw. der Diagonalen die Größe der Eindrückfläche bestimmen. Diese Fläche ist dann in bezug auf Vergleichswerte von Referenzstücken ein Maß für die Härte des geprüften Werkstückes. Um dieses bereits bekannte Verfahren weitgehend zu automatisieren, ist bereits für ein Prüflabor vorgeschlagen worden, den durch die Kugel erzeugten Flächenabdruck berührungslos auf der Werkstückoberfläche mittels einer Kamera abzutasten (s. hierzu Prospekt der Fa. Foundrax Engineering Products Limited). Die Kamera ist mit einer Auswerteeinheit verbunden, wo mit Hilfe bekannter mathematischer Algorithmen die Umrechnung der Meßwerte in den gesuchten Härtewert erfolgt.

Weiterhin ist aus der DE 39 01 432 bekannt mit Hilfe einer Videokamera, eines Digitalisierers und eines Rechners und einer dazu passenden Software den Kugelabdruckdurchmesser an einer Brinell-Härteprüfmaschine mit hinreichender Genauigkeit zu erfassen.

Eine für die Härteprüfung von Rohren oder Stäben geeignete gattungsmäßige Prüfvorrichtung ist der US-PS 4,635,471 zu entnehmen. An einem Rahmengestell ist eine senkrecht bewegbare Halterung mit einer Prismenauflage für das Werkstück sowie eine horizontal und vertikal verschiebbare Vorrichtung angeordnet, an der ein Bearbeitungswerkzeug und ein Härteprüfgerät befestigt sind. Das Werkstück wird mittels an Führungsschienen verschiebbaren Klemmhaltern auf der Prismenunterlage fixiert und anschließend die verschiebbare Vorrichtung auf die Rohrachse positioniert. Nachteilig bei dieser Prüfvorrichtung ist, daß ein infolge eines krummen und/oder ovalen Rohres sich ergebender Seiten- und/oder Höhenversatz der Prüfstelle in bezug auf die Auflagenachse automatisch nicht ausgeglichen werden kann und eine mechanische Bearbeitung, z. B. Fräsen im Extremfall zu tief oder überhaupt nicht erfolgt und deshalb die Aussagekraft der an unterschiedlichen Materialtiefen ermittelten Werte eingeschränkt ist.

In der JP 70-143739 A ist ein automatisch arbeitendes Härteprüfgerät offenbart, bei dem durch einen das Prüfstück abtastenden Sensor die Bildkontur erkannt wird und durch Vergleich mit einem in einem Rechner gespeicherten Sollbild ein vorher in seinen Koordinaten festgelegter Prüfort automatisch gefunden wird. Dazu ist der Auflagetisch für das Prüfstück in der x- und y-Richtung verschiebbar. Durch dieses Verfahren soll sichergestellt werden, daß für eine Serie von gleichen Prüfstücken immer die gleiche Stelle geprüft wird. Außerdem kann mit diesem Verfahren der Härteeindruck in einen die Nutzung des Werkstückes nicht einschränkenden Bereich gelegt werden.

Aufgabe der Erfindung ist es, ein Verfahren und eine Vorrichtung zur Prüfung der Härte eines Werkstückes anzugeben, mit dem bzw. mit der im Fertigungsfluß für Werkstücke mit einer stetig gekrümmten Mantelfläche, insbesondere Rohre oder Stäbe, eine automatische Härteprüfung mit hoher Aussagekraft möglich ist.

Diese Aufgabe wird mit den im kennzeichnenden Teil des Anspruches 1 angegebenen Merkmalen gelöst. Vorteilhafte Weiterbildungen sowie eine Vorrichtung zur Durchführung des Verfahrens sind in den Unteransprüchen festgelegt.

Erfindungswesentlich ist, daß durch einen Abstandsensor vor der mechanischen Bearbeitung der Werkstückoberfläche der Konturverlauf der im Wegbereich des Werkzeuges liegenden Stelle erfaßt wird und die horizontale Positionierung des Härteprüfgerätes sich am ermittelten Scheitelpunkt der Kontur orientiert.

Der Vorteil des erfindungsgemäßen Verfahrens ist darin zu sehen, daß durch die Ermittlung des Scheitelpunktes der stetig gekrümmten Werkstückoberfläche das Härteprüfgerät horizontal genau positioniert werden kann und damit sichergestellt ist, daß im Mittenbereich der bearbeiteten Fläche die Einpressung des Eindringkörpers erfolgt. Die damit ermittelten Härtewerte haben eine hohe Aussagekraft und die Schwankungsbreite der Meßwerte ist sehr gering.

Wird die Härteprüfung in bekannter Weise in einem Prüflabor durchgeführt, bereitet es normalerweise keine Schwierigkeiten, die für die Härtemessung erforderlichen Bedingungen optimal einzustellen und dadurch aussagefähige Härtewerte zu ermitteln. Die Härteprüfung im Fluß einer Fertigungslinie dagegen ist mit Problemen verbunden, da labormäßige Zustände größtenteils unter den rauhen Betriebsbedingungen nicht realisierbar sind. Eine der Schwierigkeiten besteht darin, das Bearbeitungswerkzeug z.B. eine Schleifscheibe oder einen Fräser auf den Scheitelpunkt der gekrümmten Fläche vertikal genau zu positionieren, um eine definierte Bearbeitungstiefe zu erhalten. Im Idealfall eines geradlinigen und im Querschnitt kreisrunden Rohres oder Stabes fluchtet nach dem Anlegen der Klemmvorrichtung die im Scheitelpunkt liegende Mantellinie des Rohres genau mit der Maschinenachse der Prüfeinrichtung. Nur unter diesen Idealbedingungen ist es relativ einfach, das Bearbeitungswerkzeug und das Härteprüfgerät auf die Maschinenachse zu positionieren, um durch exaktes Aufsetzen auf den Scheitelpunkt zu reproduzierbaren Ergebnissen zu gelangen. In der praktischen Realität sind die Rohre aber sehr oft leicht krumm und der Querschnitt nicht immer kreisrund. In diesen Fällen ist es nicht ausgeschlossen, daß bei einem eiförmigen Rohrquerschnitt der Mittelpunkt der bearbeiteten Fläche neben der Maschinenachse liegt. Da das Bearbeitungswerkzeug üblicherweise auf den Nennaußendurchmesser des Rohres oder des Stabes und damit auf eine festgelegte Höhenposition eingestellt ist, erfolgt entweder keine Bearbeitung oder im anderen Extremfall in einer die Wanddicke beeinträchtigenden Tiefe mit der Gefahr, daß die gekrümmte Oberfläche des Werkstückes unzulässig tief eingekerbt wird. Bei einer Positionierung mit kleinem Tiefensollwert wird die angestrebte Bearbeitungstiefe meistenteils nicht erreicht. Wird dann entsprechend dem bekannten Verfahren das Härteprüfgerät auf Maschinenachse eingestellt, so ist es möglich, daß der Härteeindruck bei Werkstücken aus Stahl noch in dem Bereich der Entkohlungszone liegt und damit eine zu niedrige Festigkeit vorgetäuscht wird.

Alle genannten Schwierigkeiten werden durch das erfindungsgemäße Verfahren beseitigt, da durch die Abtastung der Kontur immer der Scheitelpunkt der gekrümmten Werkstückoberfläche ermittelt wird und das Bearbeitungswerkzeug vertikal und das Härteprüfgerät horizontal entsprechend positioniert werden können. Das vorgeschlagene Verfahren ist von besonderem Vorteil für lange und schwere Rohre, z. B. 12 m Länge, Gewicht > 1t, bei denen es nicht möglich ist, mittels der Festklemmkraft die Rohrachse mit der Maschinenachse der Prüfstation in Übereinstimmung zu bringen. Dies bedeutet, daß es ausreichend ist, daß das Rohr bzw. der Stab durch den Niederhalter fixiert wird, unabhängig davon, welche Lage die Rohrachse zur Maschinenachse einnimmt.

Beispielsweise liegen bei einem praktischen Ausführungsbeispiel Abweichungen der Lage des Scheitelpunktes von der Maschinenachse von ± 50 mm noch im Positionierbereich des Bearbeitungswerkzeuges und des Härteprüfgerätes. Neben dem Seitenversatz wird durch die Einstellbarkeit der Bearbeitungstiefe auch der Höhenversatz berücksichtigt. Dazu wird die Unterkante des Niederhaltens erfaßt und der Kontakt mit der Werkstückoberfläche als Bezugspunkt für die vertikale Positionierung des Bearbeitungswerkzeuges gewählt. Bezogen auf diesen Punkt wird beispielsweise die Bearbeitungstiefe des Werkzeuges auf einen Wert - 0,3 mm vorgegeben bei einem Positionierbereich von -5 mm. Die Wahl des Kontaktes des Niederhaltens mit der Werkstückoberfläche als Bezugspunkt für die vertikale Positionierung des Bearbeitungswerkzeuges ist ausreichend für Werkstücke mit fast ebener Oberfläche und z. B. für Stäbe, bei denen die Tiefenlage des Härteeindruckes eine untergeordnete Rolle spielt. Präziser wird das Verfahren dann, wenn der zuvor ermittelte Scheitelpunkt der gekrümmten Werkstückoberfläche als Bezugspunkt gewählt wird. Bei diesem Verfahren wird sichergestellt, daß auch bei einer welligen bzw. unebenen Oberfläche des Werkstückes unabhängig von der Höhenlage des Niederhalters reproduzierbar eine bearbeitete Fläche mit genau definierter Tiefenlage erzeugt wird. Für die praktische Durchführung kann zum einen der die gekrümmte Kontur abtastende Abstandsensor verwendet werden, wobei dieser eine Meßgenauigkeit in 1/100 mm Bereich aufweisen sollte. Regelungstechnisch einfacher ist es, einen mit dem Bearbeitungswerkzeug gekoppelten zweiten Abstandsensor vorzusehen, der auf den zuvor ermittelten Scheitelpunkt positioniert wird. Dieser zweite Abstandsensor arbeitet z. B. nach dem Prinzip der Lasertechnik und hat eine Meßgenauigkeit von ± 1/100 mm, so daß das Bearbeitungswerkzeug auf eine Tiefengenauigkeit von ± 1/10 mm eingestellt werden kann. Der die Kontur abtastende erste Abstandsensor kann im Unterschied dazu sehr grob messen, da bei der horizontalen Scheitelpunkterfassung ein Toleranzwert von ± 1 mm ausreichend ist. Bei Anordnung zweier Abstandsensoren erfolgt die Tiefeneinstellung in der Weise, daß mit der Höhenlage des Niederhaltens die Grobeinstellung für die Bearbeitungstiefe erfolgt und nach Messung des Abstandes des Scheitelpunktes mittels des zweiten Abstandsensors die Feinstellung für das Bearbeitungswerkzeug.

Zur Durchführung des Verfahrens wird eine Prüfstation vorgeschlagen, die in bekannter Weise aus einem Werkstückhalter, einer das Bearbeitungswerkzeug haltenden Vorrichtung, einem Härteprüfgerät und einem Auswertesystem, das elektrisch mit einer Abtasteinrichtung verbunden ist, besteht. Zu diesen bereits bekannten Vorrichtungen wird erfindungsgemäß ein Abstandsensor hinzugefügt, der zusammen mit dem Bearbeitungswerkzeug und dem Härteprüfgerät in der genannten Abfolge auf einer Schwenkeinrichtung befestigt ist, dessen Drehachse in einem definierten Abstand zur Maschinenachse der Prüfstation angeordnet ist. Mittels der Schwenkeinrichtung sind die genannten Vorrichtungen in den Prüfbereich einschwenkbar und positionierbar. Das Prüfverfahren läuft nun in der Weise ab, daß der die Kontur der gekrümmten Werkstückoberfläche abtastende Sensor im horizontalen Kreisbogen über den zu prüfenden Werkstückbereich geschwenkt und nach Erkennung der Werkstückkanten kontinuierlich der Abstand vom Festpunkt des Sensors zur Werkstückoberfläche gemessen wird. Die Meßwerte werden einem Steuergerät zugeführt, das aus dem parabelförmigen Verlauf der Konturlinie die Lage der Scheitelmitte berechnet und mit Hilfe bekannter mathematischer Algorithmen den zu diesem Punkt gehörenden Schwenkwinkel der Schwenkeinrichtung ermittelt. Das auf der Schwenkeinrichtung hinter dem Abstandsensor und dem Bearbeitungswerkzeug angeordnete Härteprüfgerät, das wie der Abstandsensor und das Bearbeitungswerkzeug auf dem gleichen Schwenkdurchmesser liegen, wird entsprechend dem ermittelten Schwenkwinkel genau auf den Scheitelpunkt der Konturlinie positioniert. Damit wird erreicht, daß der Härteeindruck in der Mitte der Bearbeitungsfläche erfolgt. Um das Verfahren noch zu verbessern, wird weiterbildend vorgeschlagen, das Bearbeitungswerkzeug an einer mit der Schwenkeinrichtung verbundenen höhenverstellbaren Vorrichtung anzuordnen und die genaue Höhenverstellung am Bezugspunkt eines weiteren Abstandsensors zu orientieren. Ziel der Verbesserung ist es, daß bezogen auf den ermittelten Scheitelpunkt jede gewünschte Bearbeitungstiefe bei unterschiedlichem Höhenversatz des Werkstückes konstant geregelt wird. Die bisher bekannten großen Streuungen der gemessenen Härtewerte werden dadurch wesentlich vermindert, da die Bearbeitungstiefe entsprechend den Erfahrungswerten über die zu erwartende Tiefe der Randentkohlung eingestellt werden kann und zwar so, daß der Eindringkörper immer im nichtentkohlten Bereich eingepreßt wird. Als Abstandsensoren können alle auf dem Markt befindlichen Typen verwendet werden, unabhängig, ob die Abtastung mechanisch, induktiv, kapazitiv oder optisch erfolgt, wobei die Signale in analoger oder digitaler Form an das Steuergerät weitergeben werden. Als vorteilhaft hat sich für den ersten Abstandsensor ein induktiv arbeitender und für den zweiten ein auf Lasertechnik beruhender Typ bewährt. Der erstgenannte Abstandsensor ist preiswert zu bekommen, da die an ihn gestellte Meßgenauigkeit nicht sehr hoch ist. Der zweitgenannte Abstandsensor ist erheblich teurer, hat aber den Vorteil, daß durch diese Anordnung mit zwei Sensoren regelungstechnischer Aufwand gespart wird im Vergleich bei der Verwendung nur eines Sensors.

Die Ermittlung der Größe der Eindruckfläche erfolgt in bekannter Weise durch eine optische Abtastung des auf einer Mattscheibe projizierten Bildes. Als Abtastgerät wird eine Diodenmatrixkamera verwendet, die nach dem Prinzip der Hell-Dunkel-Unterscheidung arbeitet. Das Auswerteverfahren ist ähnlich dem bereits bekannten Verfahren und hat ebenfalls zum Ziel, den über die Flächenermittlung berechenbaren Härtewert mit einem vorgegebenen Sollwert zu vergleichen. Dieser Abgleich wird, wie bereits erwähnt, auch dazu verwendet, ein Steuersignal zu bilden, um die geprüften Werkstücke sortieren zu können.

Die erfindungsgemäße Prüfstation kann weiterbildend verbessert werden, indem zusätzlich zu den bereits aufgezählten Vorrichtungen ein berührungslos arbeitendes Wanddickenmeßgerät z.B. ein US-Prüfgerät an der Schwenkeinrichtung befestigt wird. Da das US-Prüfgerät in der gleichen Weise wie das Bearbeitungswerkzeug und das Härteprüfgerät positionierbar ist, wird genau die Wanddicke gemessen, die entsprechend der angebrachten Sekante der dünnsten Stelle der bearbeiteten Fläche entspricht. Damit kann verhindert werden, daß Rohre ausgeliefert werden, bei denen durch die bearbeitete Fläche für die Härteprüfung die einzuhaltende Mindestwanddicke an der bearbeiteten Stelle unterschritten ist.

In der Zeichnung werden anhand eines Ausführungsbeispieles das erfindungsgemäße Verfahren und die dazugehörige Vorrichtung näher erläutert.

Es zeigen:

Fig. 1a    in schematischer Darstellung die Stellung eines zu prüfenden Rohres im Idealzustand

Fig. 1b    eine Draufsicht von Fig. 1a

Fig. 1c    in schematischer Darstellung die Stellung eines zu prüfenden Rohres mit Höhen- nd Seitenversatz

Fig. 1d    eine Draufsicht von Fig. 1c

Fig. 1e    in schematischer Darstellung die Stellung eines zu prüfenden Rohres mit Höhen- und Seitenversatz mit ermitteltem Scheitelpunkt

Fig. 1f    eine Draufsicht von Fig. 1e

Fig. 2    Fig. 2 in schematischer Darstellung die Konturerfassung des zu prüfenden Rohres

Fig. 3    in einer Draufsicht schematisch die erfindungsgemäße Prüfstation

Fig. 4    eine Vorderansicht der Anlage gemäß Fig. 3

Fig. 5 + 6    schematisch die Einstellung der Bearbeitungtiefe bei Rohren mit stark unebener Oberfläche

Figur 7    den Ablaufplan des erfindungsgemäßen Verfahrens

Figur 8    die Meßvorrichtung zur Erfassung des Mattscheibenbildes.

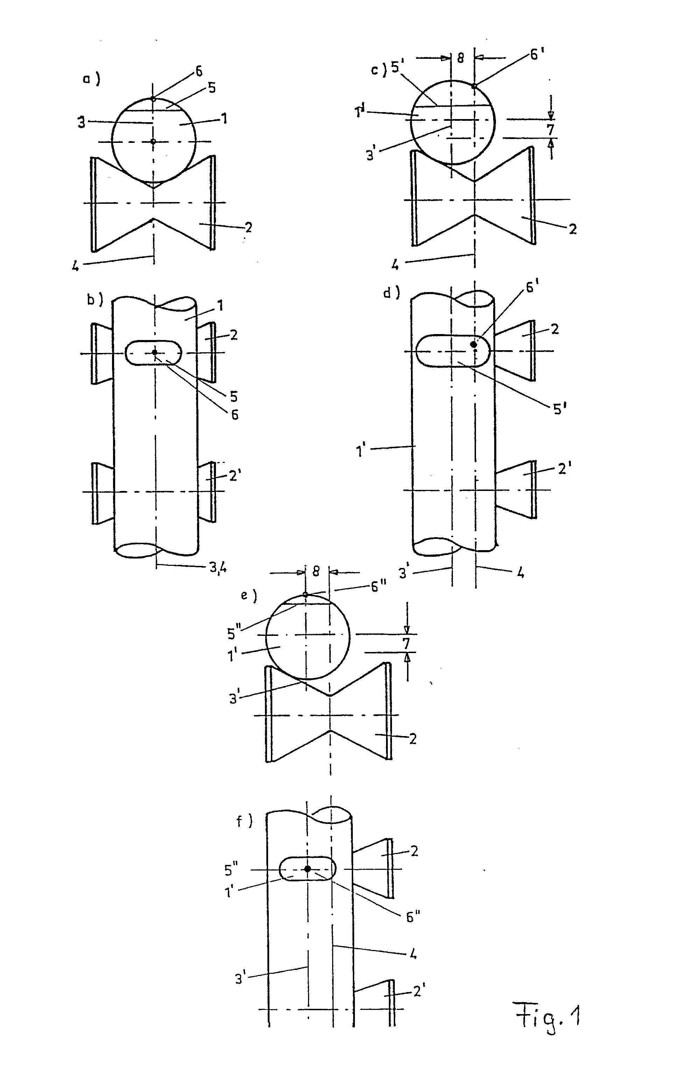

Figur 1a und 1b zeigen in einer schematischen Darstellung die Stellung eines zu prüfenden Rohres 1 im Idealzustand. Das Rohr 1 liegt auf einer doppelkonisch ausgebildeten Rolle 2, die Teil eines hier nicht dargestellten Rollganges ist. Bei diesem quasi labormäßigen Zustand fluchtet die Achse 3 des Rohres 1 mit der Maschinenachse der Prüfeinrichtung 4, so daß ein auf diese Maschinenachse 4 ausgerichtetes Bearbeitungswerkzeug (hier nicht dargestellt) eine bearbeitete Fläche 5 erzeugt (hier stark übertrieben dargestellt), die orthogonal auf der Achse 3 des Rohres 1 liegt und deren Mitte mit dem Scheitelpunkt 6 des Rohres 1 fluchtet.

In der Draufsicht (1b) kann man die Umrisse der bearbeiteten Fläche 5 erkennen. Diese Darstellung gilt unter der Annahme, daß der Verfahrweg des Bearbeitungswerkzeuges senkrecht zur Maschinenachse 4 liegt.

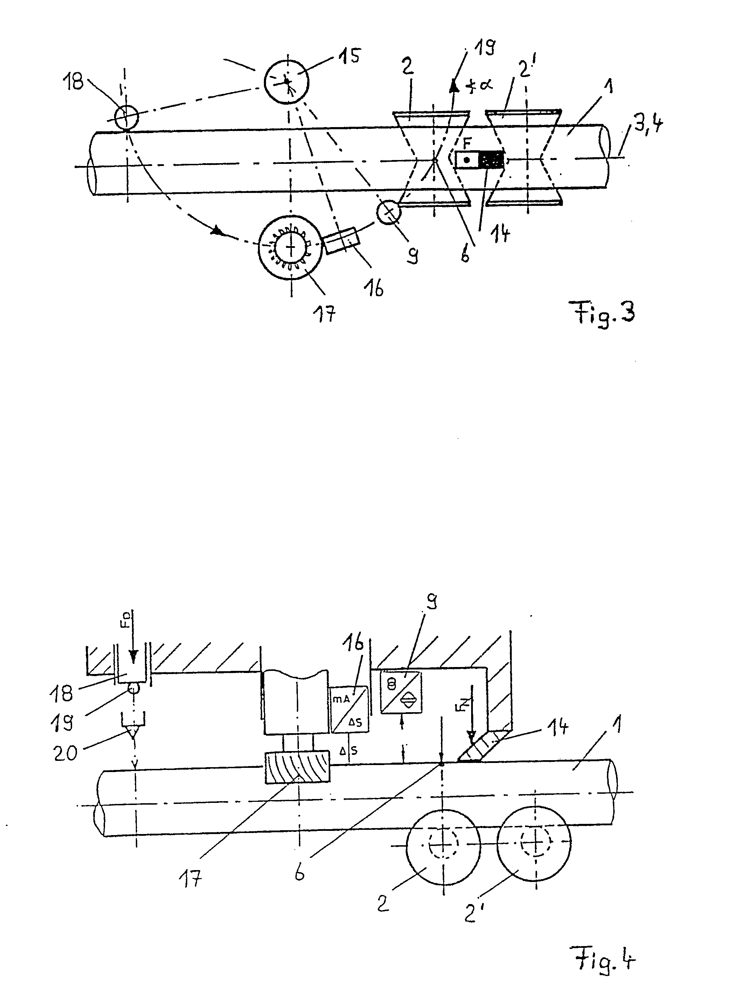

Im Vergleich dazu zeigem Figur 1c und 1d in einer schematischen Darstellung die Stellung eines zu prüfenden Rohres 1' mit Höhen 7- und Seitenversatz 8. Unter der Annahme, daß das Bearbeitungswerkzeug höhenlagemäßig weiterhin auf den in den Figuren 1a und 1b dargestellten Idealzustand ausgerichtet ist, wird stark übertrieben eine bearbeitete Fläche 5' erzeugt, die für die Härteprüfung völlig unbrauchbar ist, da sie zu einer Zerstörung des Rohres 1' führen würde. Außerdem würde der Prüfort 6' für den Härteeindruck nicht mehr in der Mitte der bearbeiteten Fläche 5', sondern am Rande liegen. Gemäß den Figuren 1e und 1f wird zur Überwindung des Problems erfindungsgemäß die Kontur der gekrümmten Rohroberfläche mittels eines Sensors 9 (Fig. 3) erfaßt und aus den gemessenen Werten der Scheitelpunkt 6'' ermittelt. Der ermittelte Scheitelpunkt 6'', der gleichzeitig Prüfort für die Positionierung des Härteprüfgerätes 18 (Fig. 3) ist, ist Voraussetzung für die Erzeugung einer brauchbaren bearbeiteten Fläche 5'' für ein höhen- und seitenversetzt 7,8 liegendes Rohr 1'. Der Härteeindruck erfolgt dann in der Mitte der bearbeiteten Fläche 5''.

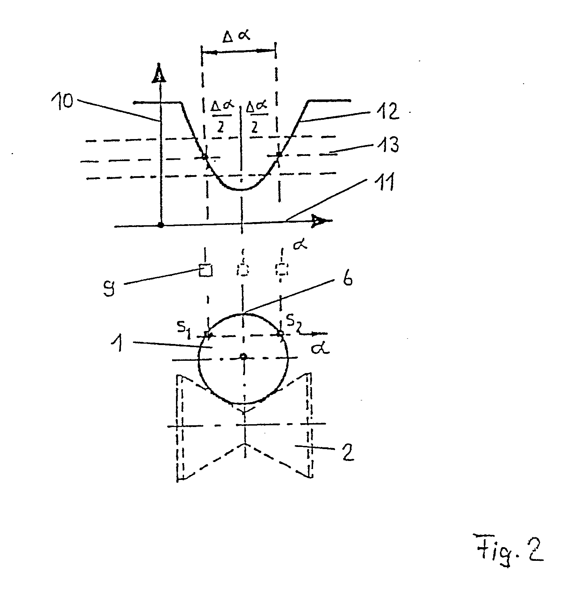

Das Meßverfahren zur Ermittlung des Scheitelpunktes ist schematisch in Figur 2 dargestellt. Im unteren Teilbild ist vergleichbar wie in Figur 1a ein zu prüfendes Rohr 1 auf einer Rolle 2 gelagert. Im oberen Teilbild ist in einem Diagramm auf der Ordinate 10 das empfangene Signal des Sensors 9 und auf der Abszisse 11 der Fahrweg alpha des Sensors 9 abgetragen. Zwischen den beiden Teilbildern ist in drei Teilstellungen die Lage des Sensors 9 zum Rohr 1 dargestellt. Der sich ergebende parabelförmige Konturverlauf 12 der Rohrkrümmung ist im oberen Teilbild dargestellt, wobei das Triggerniveau 13 innerhalb einer gewissen Bandbreite beliebig eingestellt werden kann. Die Triggerpunkte zur Ermittlung des Scheitelpunktes 6 sind mit S1 und S2 im unteren Teilbild gekennzeichnet.

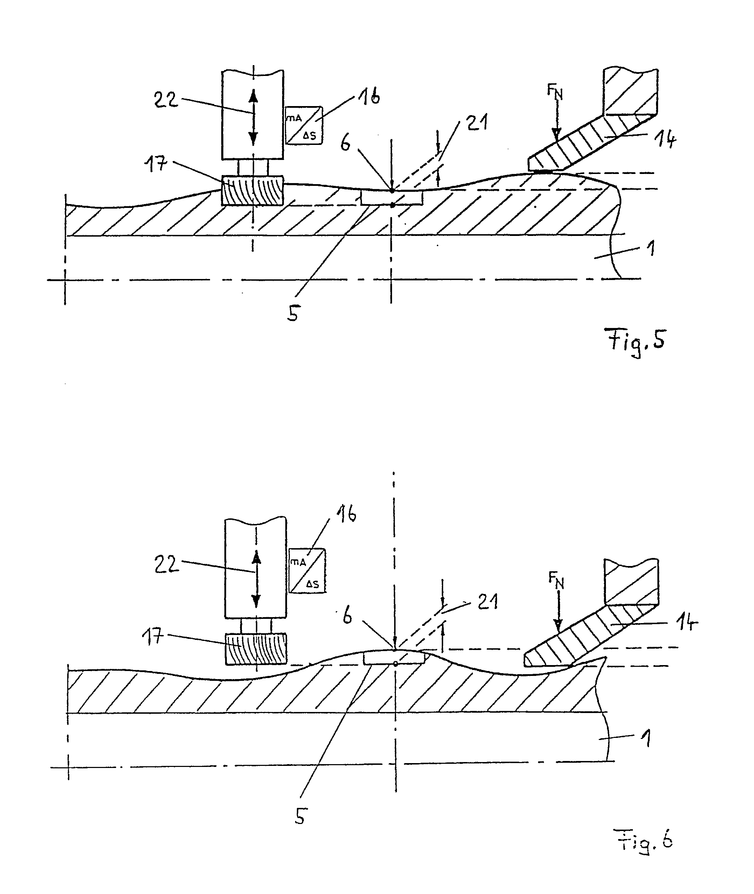

Figur 3 zeigt in einer Draufsicht und Figur 4 in einer Vorderansicht schematisch die erfindungsgemäße Prüfstation. Das zu prüfende Rohr 1 wird durch einen Niederhalter 14 mit der Kraft $F_N$ auf die Rollen 2,2' gedrückt und festgeklemmt. Dabei wird der Idealzustand angenommen, daß die Rohrachse 3 mit der Maschinenachse 4 der Prüfstation fluchtet. In einem festgelegten Abstand zur Maschinenachse 4 sind an einer Drehachse 15 schwenkbar der Sensor 9 zur Ermittlung des Scheitelpunktes 6 und nachgeschaltet ein Sensor 16 zur Einstellung der Bearbeitungstiefe (siehe Figuren 5 und 6) sowie das Bearbeitungswerkzeug 17 und der Eindringkörper 18 des hier nicht dargestellten Härteprüfgerätes angeordnet. Mit dem Pfeil 19 ist der bei der Schwenkbewegung zurückgelegte Fahrweg alpha gekennzeichnet. Der Eindringkörper 18 wird mit einer vorgegebenen Kraft $F_D$ auf die Mitte der zuvor bearbeiteten Fläche in das Rohr 1 eingedrückt. Die wahlweise Verwendung einer Brinellkugel 19 oder einer Vickers-Pyramide 20 ist hier skizzenhaft angedeutet.

In den Figuren 5 und 6 ist anhand zweier Beispiele schematisch die Einstellung der Bearbeitungtiefe 21 bei Rohren 1 mit stark unebener Oberfläche dargestellt. Als Bearbeitungswerkzeug 17 zur Herstellung der bearbeiteten Eindrückfläche 5 wird hier ein Fräser verwendet, da eine gefräste Fläche ganz eben ist und nicht zur Balligkeit neigt wie eine geschliffene Fläche. Der dem Bearbeitungswerkzeug 17 vorgeschaltete Sensor 16 mißt im vorher ermittelten Scheitelpunkt 6 die Rohrhöhenposition, der der Null-Lage des Bearbeitungswerkzeuges 17 entspricht. Von da an gerechnet wird mit dem vorgegebenen Sollwert für die Frästiefe 21 die vorgegebene Fläche bearbeitet.

Die Höhenverstellbarkeit des Bearbeitungswerkzeuges 17 ist durch einen Pfeil 22 gekennzeichnet.

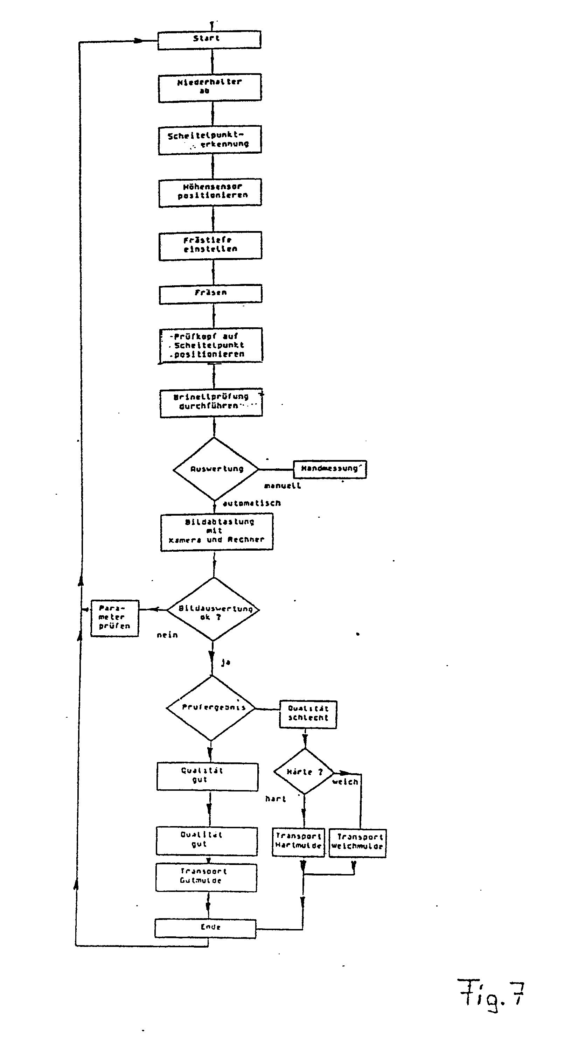

In Figur 7 ist der Ablaufplan des erfindungsgemäßen Verfahrens wiedergegeben. Je nach Prüfergebnis können die Rohre in verschiedenen Mulden automatisch abgefahren werden, so daß der Materialfluß für die guten Rohre ungestört bleibt.

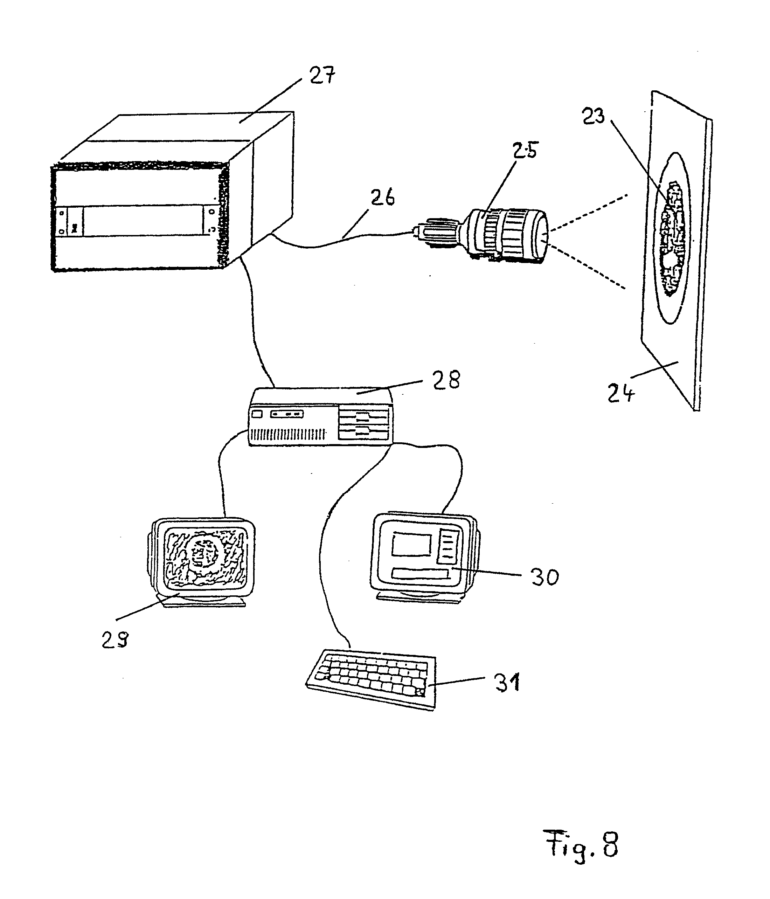

Figur 8 zeigt die Meßvorrichtung zur Erfassung des Abbildes der Eindrückfläche 23 auf der Mattscheibe 24, um die Ermittlung des Härtewertes zu automatisieren. Eine Diodenmatrixkamera 25, hier ist nur die Optik wiedergegeben, tastet flächenmäßig das Abbild der Eindrückfläche 23 auf der Mattscheibe 24 ab. Über ein Kabel 26 ist die Kamera 25 mit einem Auswertegerät 27 verbunden, das wiederum mit einem Rechner 28 verknüpft ist. Das Abbild der Eindrückfläche 23 kann zusätzlich auf einem Kontrollmonitor 29 abgebildet werden, während die ermittelten Flächendaten einschließlich der Prüfparameter auf einem Datenmonitor 30 erscheinen. Die Tastatur 31 dient als Steuerpult für den Start und das Ende des Prüfablaufes und kann aber auch dazu benutzt werden, um verschiedene Abfragen hinsichtlich der Flächenermittlung zu stellen.

**Patentansprüche**

1. Verfahren zur Prüfung der Härte eines eine stetig gekrümmte Mantelfläche aufweisenden Werkstückes, insbesondere Rohr oder Stab, nach dem Eindringverfahren, bei dem bei festgehaltenem Werkstück mittels einer zum Werkstück bewegbaren Vorrichtung, an der ein Bearbeitungswerkzeug und ein Härteprüfgerät angeordnet sind, ein Eindringkörper mit einer definierten Kraft in einen vorher mechanisch bearbeiteten Bereich der Werkstückoberfläche gepreßt wird,
dadurch gekennzeichnet,
daß ein im horizontalen Wegbereich des Bearbeitungswerkzeuges liegender Bereich der Werkstückoberfläche vor der Bearbeitung mittels eines Abstandsensors linienförmig abgetastet und aus den Meßdaten der Scheitelpunkt der gekrümmten Oberfläche ermittelt wird, der dann für die Positionierung des Härteprüfgerätes den Prüfort und ein im Scheitelbereich des Werkstückes liegender Ort den Bezugspunkt für die vertikale Positionierung des Bearbeitungswerkzeuges bildet.

2. Verfahren nach Anspruch 1,
dadurch gekennzeichnet,
daß der ermittelte Scheitelpunkt den Bezugspunkt für die vertikale Positionierung des Bearbeitungswerkzeuges bildet.

3. Verfahren nach Anspruch 1 oder 2,
dadurch gekennzeichnet,
daß mittels eines weiteren Abstandsensors die Höhenlage des Scheitelpunktes ermittelt wird und diese dann den Bezugspunkt für die Feineinstellung der vertikalen Positionierung bildet.

4. Verfahren nach Anspruch 1,
dadurch gekennzeichnet,
daß die verbleibende Wanddicke im mechanisch bearbeiteten Bereich der Werkstückoberfläche berührungslos gemessen wird.

5. Prüfstation zur Durchführung des Verfahrens nach Anspruch 1 mit einer Werkstückauflage, einem Werkstückhalter und einem an einer verschiebbaren und höhenverstellbaren Vorrichtung angeordneten Bearbeitungswerkzeug und Härteprüfgerät,
dadurch gekennzeichnet,
daß die das Bearbeitungswerkzeug (17) und das Härteprüfgerät (18) aufweisende Vorrichtung als Schwenkeinrichtung ausgebildet ist, dessen Drehachse (15) in einen festgelegten Abstand senkrecht zur Achse (4) der als Rollgang ausgebildeten Werkstückauflage liegt und mit gleichem Radius von der Drehachse (15) entfernt vor dem Bearbeitungswerkzeug (17) an der Schwenkeinrichtung ein Abstandsensor (9) angeordnet ist und in der genannten Abfolge die genannten Geräte in den Prüfbereich einschwenkbar und positionierbar sind und der Abstandsensor (9) elektrisch mit einem Steuergerät verbunden ist.

6. Prüfstation nach Anspruch 5,
dadurch gekennzeichnet,
daß das Bearbeitungswerkzeug (17) an einer mit der Schwenkeinrichtung verbundenen höhenverstellbaren Vorrichtung (22) angeordnet ist und diese einen Abstandsensor (16) aufweist, der elektrisch mit dem Steuergerät verbunden ist.

7. Prüfstation nach Anspruch 5,
dadurch gekennzeichnet,
daß zur Ermittlung der Restwanddicke an der Schwenkeinrichtung in der Abfolge nach dem Bearbeitungswerkzeug (17) ein berührungslos arbeitendes Wanddickenmeßgerät angeordnet ist.

Fig. 1

Fig. 2

Fig. 3

Fig. 4

Fig. 5

Fig. 6

Fig. 7

Fig. 8